# FASCICULE DE BREVET EUROPEEN

(11) **EP 3 969 329 B1**
(45) Date de publication et mention de la délivrance du brevet: **08.11.2023**
(21) Numéro de dépôt: 20714227.4
(22) Date de dépôt: 31.03.2020
(51) Int. Cl.: B60R 11/04, B60S 1/00

(54) **AGENCEMENT DE MONTAGE D'UN SYSTEME OPTIQUE SUR UN ELEMENT DE CARROSSERIE D'UN VEHICULE**
ANORDNUNG ZUR MONTAGE EINES OPTISCHEN SYSTEMS AN EINEM KAROSSERIEELEMENT EINES FAHRZEUGS
ARRANGEMENT FOR MOUNTING AN OPTICAL SYSTEM ON A BODY ELEMENT OF A VEHICLE

(30) Priorité: 17.05.2019 FR 1905178
(43) Date de publication de la demande: 23.03.2022
(73) Titulaire: A. Raymond et Cie, 38000 Grenoble (FR)
(72) Inventeur: SANCHEZ, Anthony, 38950 SAINT-MARTIN-LE-VINOUX (FR); LINDGENS, Marcel, ZHENJIANG, JIANGSU 212009 (CN); DONG, Zhiwei, ZHENJIANG, JIANGSU 212009 (CN)
(74) Mandataire: IP Trust
(86) Numéro de dépôt international: PCT/EP2020/059079
(87) Numéro de publication internationale: WO 2020/233878

(56) Documents cités:
- EP-A1- 2 873 571
- WO-A1-2018/043743
- US-A1- 2018 345 917

## Description

### DOMAINE DE L'INVENTION

La présente invention concerne un agencement de montage d'un système optique sur un élément de carrosserie d'un véhicule.

### ARRIERE PLAN TECHNOLOGIQUE DE L'INVENTION

Il est de plus en plus commun d'équiper des véhicules, notamment des véhicules automobiles, de dispositifs de prise de vue. Il peut ainsi s'agir d'une caméra de recul intégrée à la porte de coffre arrière du véhicule ou à son bouclier, ou intégrée dans un rétroviseur extérieur pour fournir des images latérales arrières de l'environnement. Le document EP3149433 proposent un agencement de montage d'un tel dispositif. Il peut également s'agir d'un dispositif laser de télédection (généralement désigné par l'acronyme « LIDAR ») ou d'un capteur d'images infrarouges.

Dans le document US2019028618, on décrit un dispositif de prise de vue destiné à équiper un véhicule automobile. Ce dispositif est fourni sous forme modulaire et compact pour s'intégrer à tout type d'éléments de carrosserie. Le dispositif modulaire est constitué d'un boîtier en plastique retenant une optique. Le boîtier comprend et protège un capteur d'images en électronique intégrée disposé sur un circuit imprimé, en vis-à-vis de l'optique. Le boîtier est refermé par un capot portant un connecteur électrique. Ce connecteur est électriquement relié au circuit imprimé et peut répondre à un standard de connexion, par exemple FAKRA, facilitant son raccordement électrique à un calculateur du véhicule, par l'intermédiaire d'un câble de raccordement standard.

L'optique d'un dispositif de prise de vue, tel que ceux décrits dans les documents précédents, est susceptible d'être souillée par la pluie, des éclaboussures ou de la poussière ce qui conduit à dégrader la qualité des images fournies et ce qui peut poser des problèmes de sécurité. Pour résoudre ce problème, on a prévu de disposer sur le véhicule, et à proximité immédiate de l'optique du dispositif de prise de vue, un dispositif de projection d'un fluide de nettoyage. En projetant ce fluide (un liquide ou de l'air comprimé) au besoin sur l'optique du dispositif de prise de vue, on cherche à éliminer les particules ou la matière qui obstrue l'optique pour retrouver une qualité d'image satisfaisante. Une telle solution est notamment décrite dans les documents WO2018043743, US20180345917 et EP2873571 dans lesquels le boîtier du dispositif de prise de vue et le dispositif de projection de fluide sont directement assemblés à un support.

### OBJET DE L'INVENTION

On cherche généralement à simplifier le montage des pièces composant un véhicule et notamment celles devant être disposées sur des éléments de carrosserie de ce véhicule. La présente invention vise à proposer un agencement facilitant le montage d'un système optique composé d'un dispositif de prise de vue et d'un dispositif de nettoyage de ce dispositif.

### BREVE DESCRIPTION DE L'INVENTION

En vue de la réalisation de ce but, l'objet de l'invention propose un agencement de montage selon la revendication 1.

Selon d'autres caractéristiques avantageuses et non limitatives de l'invention, prises seules ou selon toute combinaison techniquement réalisable :
- l'élément de logement présente une paroi latérale dans laquelle est aménagée au moins une languette flexible présentant une extrémité libre portant un cran, la languette flexible pouvant se déformer pour permettre l'introduction du dispositif optique de prise de vue dans l'élément de logement et refermer le cran sur celui-ci lorsqu'il est disposé en position de montage ;
- l'élément de logement présente un fond et l'interface électrique comprend un connecteur disposé sur le fond de l'élément de logement ;
- l'interface électrique comprend un câble de connexion électriquement relié au connecteur disposé sur le fond de l'élément de logement ;
- l'élément de logement et l'élément de maintien du dispositif de projection sont constitutif d'un même corps principal ;
- l'élément de fixation comprend une pluralité de languettes flexibles disposées sur le corps principal et configurées pour s'encliqueter sur l'élément de carrosserie ;
- l'élément de fixation comprend une pluralité de pieds d'encliquetage disposée sur le corps principal et configurés pour pénétrer dans des ouvertures aménagées sur l'élément de carrosserie ;
- l'agencement de montage comprend un élément de verrouillage pouvant être sélectivement placé dans une position déverrouillée dans laquelle les pieds d'encliquetage peuvent être extraits des ouvertures de l'élément de carrosserie et dans une position de verrouillage dans laquelle les pieds d'encliquetage ne peuvent pas être extraits des ouvertures de l'élément de carrosserie ;
- l'élément de fixation est porté par une pièce intermédiaire fixée de manière réversible au corps principal ;
- la pièce intermédiaire comprend deux parties reliées par un anneau de liaison, chaque partie étant configurée pour coulisser dans un rail d'assemblage aménagé sur le corps principal ;
- l'élément de fixation et l'élément de maintien du dispositif de projection de fluide sont portés par une pièce intermédiaire fixée de manière réversible à l'élément de logement ;
- la pièce intermédiaire est fixée de manière irréversible à l'élément de carrosserie ;
- l'élément de fixation comprend une pluralité d'agrafes métalliques configurées pour coopérer avec des éléments de retenus aménagés sur l'élément de carrosserie du véhicule ;
- l'élément de fixation comprend une matière adhésive disposée sur pièce intermédiaire ;
- la pièce intermédiaire comprend des éléments d'ajustement de la position angulaire de l'élément de logement.

### BREVE DESCRIPTION DES FIGURES

D'autres caractéristiques et avantages de l'invention ressortiront de la description détaillée de l'invention qui va suivre en référence aux figures annexées sur lesquels :
[Fig. 1a]
[Fig. 1b]
[Fig. 1c]
[Fig. 1d] Les figures 1a à 1d représentent un agencement de montage conforme à un premier mode de mise en oeuvre ;
[Fig. 2a] la figure 2b représente une variante du premier mode de mise en oeuvre ;
[Fig. 2b] la figure 2b représente la variante de la figure 2a en vue éclatée.
[Fig. 3a]

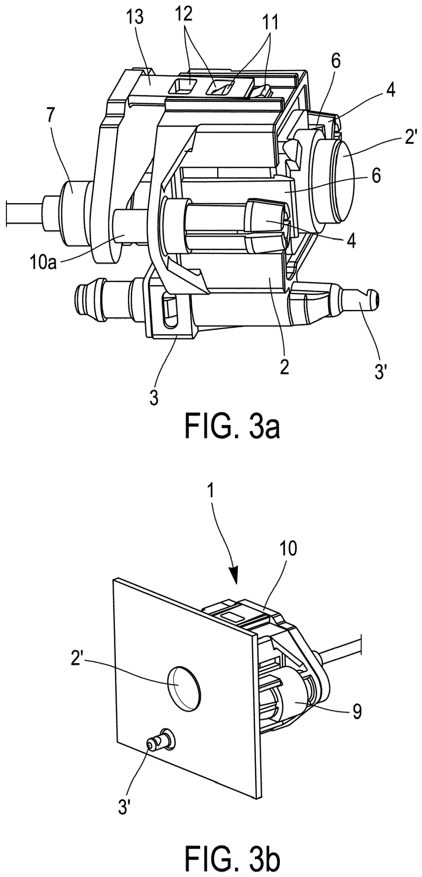

[Fig. 3b] les figures 3a et 3b représentent un agencement de montage conforme à un autre mode de mise en oeuvre ;
[Fig. 4a]
[Fig. 4b]
[Fig. 4c]

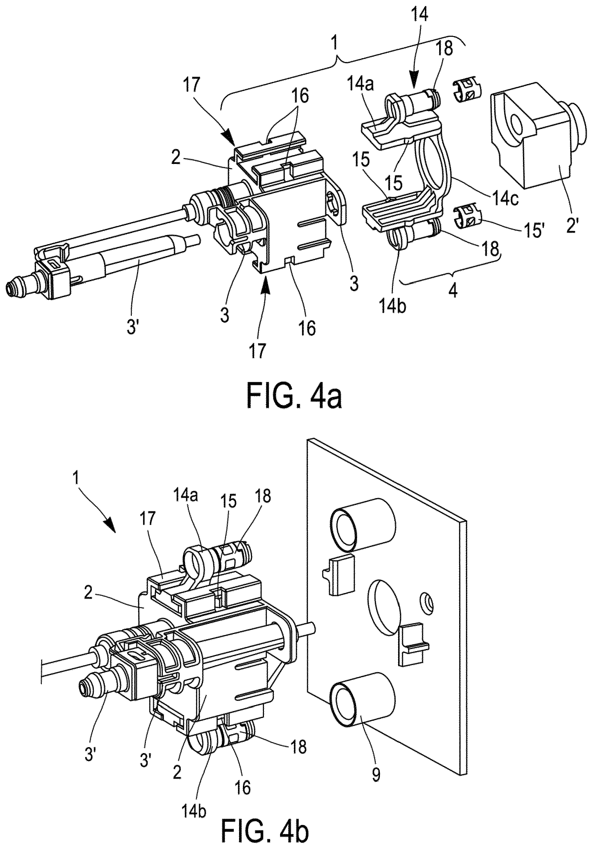

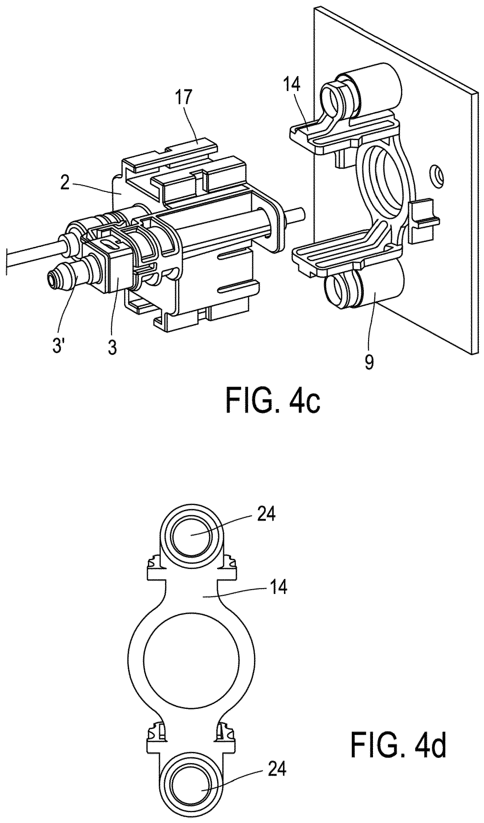

[Fig. 4d] les figures 4a à 4d représentent un agencement de montage conforme à un autre mode de mise en oeuvre ;
[Fig. 5a]
[Fig. 5b]
[Fig. 5c]

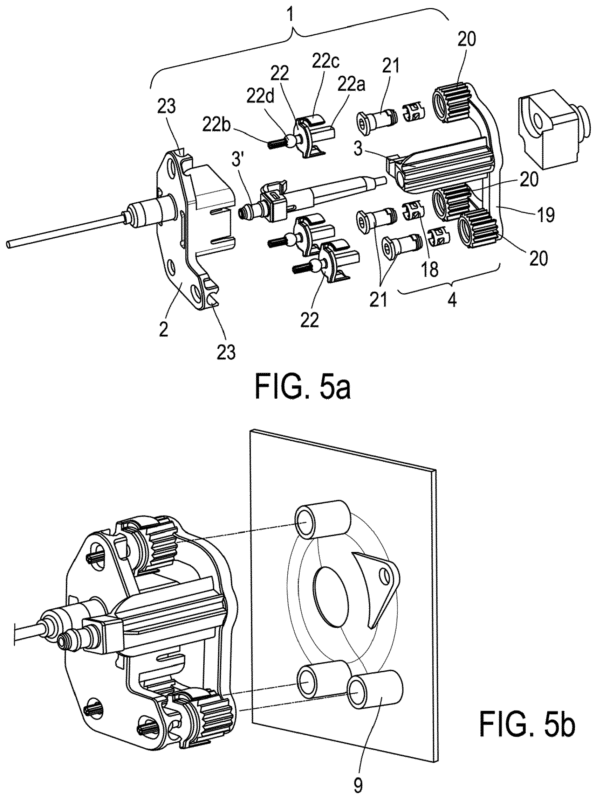

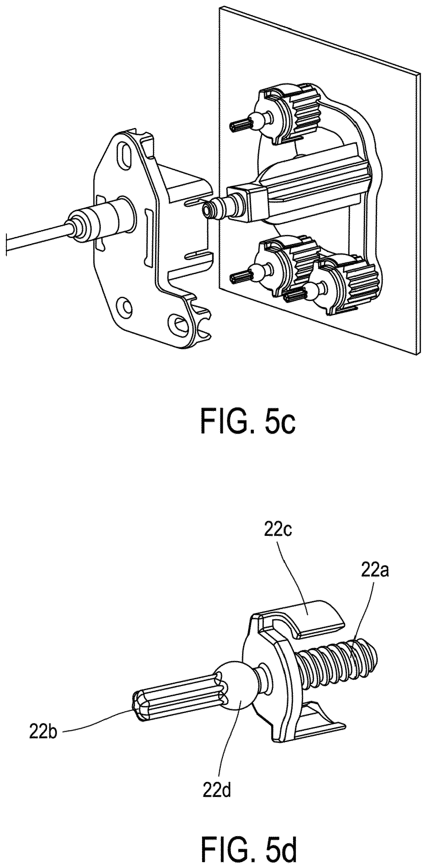

[Fig. 5d] les figures 5a à 5d représentent un agencement de montage conforme à encore un autre mode de mise en oeuvre.

### DESCRIPTION DETAILLEE DE L'INVENTION

Dans la suite de cette description, on désignera par « système optique », l'ensemble constitué d'un dispositif de prise de vue 2' et d'un dispositif de projection de fluide 3' que l'on cherche à assembler à un élément de carrosserie d'un véhicule. Et par « dispositif de prise de vue » on entend tout dispositif apte former une représentation de l'environnement du véhicule, il peut notamment s'agir d'un capteur d'images dans le domaine du visible, ou dans l'infrarouge, ou dans tout autre gamme de longueur d'onde. Il peut également s'agir d'un dispositif à base de laser, comme un LIDAR, comme cela a été déjà précisé en introduction de cette demande. Dans tous les cas, le dispositif de prise de vue est fourni sous forme modulaire ; il comprend un boîtier, par exemple en plastique, retenant une optique. Le boîtier comprend et protège un capteur disposé sur un circuit imprimé. Le boîtier porte un connecteur électrique, électriquement relié au circuit imprimé.

Dans l'approche retenue, le système optique peut être pré-monté sur un agencement 1 afin de faciliter son assemblage à l'élément de carrosserie. A cet effet, l'élément de carrosserie est muni d'ouvertures configurée pour recevoir l'optique du dispositif de prise de vue 2' et une buse d'extrémité du dispositif de projection 3'.

D'une manière très générale, et en référence aux figures, un agencement de montage 1 du système optique conforme aux différents modes de mises en oeuvre composant la présente description comprend :
- un élément de logement 2 pour retenir un dispositif optique de prise de vue 2' et s'interfacer électriquement avec ce dispositif;
- un élément de maintien 3 d'un dispositif de projection de fluide 3';
- un élément de fixation 4 de l'élément de logement 2 et de l'élément de maintien 3 à un élément de carrosserie d'un véhicule.

L'élément de logement 2 est par exemple formé de quatre parois latérales définissant un logement 5 dans lequel le dispositif de prise de vue 2' peut être placé, en position de montage. Le dispositif de prise de vue 2' peut être fixé par tout moyen à l'élément de logement 2, par exemple dans le logement 5, afin de le retenir dans cette position de montage.

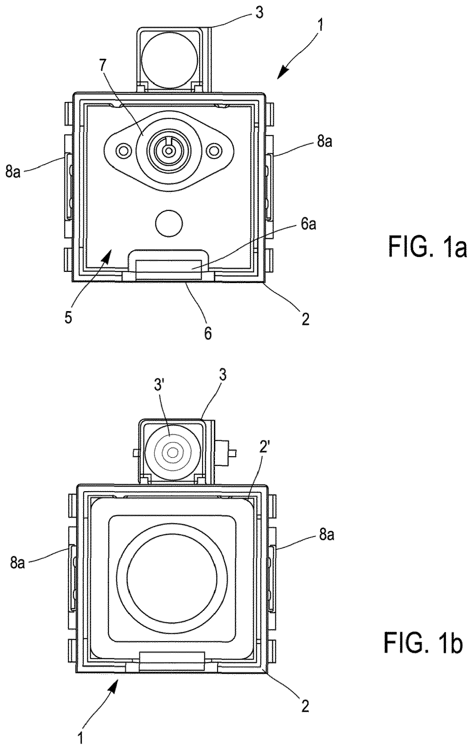

Dans l'exemple représenté sur les figures 1a à 1d, l'élément de logement 2 présente une languette flexible 6 aménagée sur une des parois latérales. La languette flexible 6 porte un cran 6a à son extrémité libre, le cran étant orienté vers l'intérieur du logement 5. La languette flexible 6 peut se déformer vers l'extérieur du logement pour permettre l'introduction du dispositif de prise de vue 2' dans le logement 5 et se refermer sur celui-ci lorsqu'il est disposé en position de montage. Dans cette position, le connecteur électrique du dispositif optique prise de vue 2' est couplé à une interface électrique 7 dont est muni l'élément de logement 2.

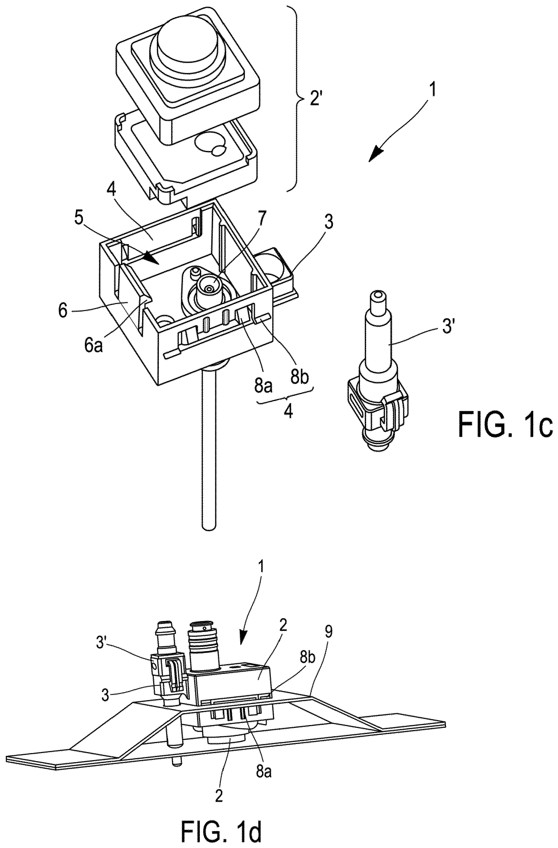

D'une manière générale, l'interface électrique 7 de l'élément de logement 2 présente un premier côté, émergeant à l'intérieur du logement 5 dans le cas représenté sur la figure 1a, permettant de le raccorder au connecteur électrique du dispositif de prise de vue 2' lorsque celui-ci est retenu par l'élément de logement 2. Comme cela est très visible sur la figure 1, l'interface électrique 7 peut comprendre un connecteur disposé sur une paroi formant le fond du logement 2. L'interface électrique 7 comprend également un second côté, émergeant à l'extérieur du logement 5 dans le cas représenté sur la figure 1c, permettant son raccordement à des câbles de connexion, afin de relier électriquement le dispositif de prise de vue 2' à un calculateur du véhicule. Le premier et le second côté de l'interface électrique 7 peuvent répondre à différents standards, par exemple au standard FAKRA. La liaison entre l'interface électrique 7 et l'élément de logement 2 peut être étanche. L'interface électrique 7 peut comprendre une section de câble, dont l'extrémité peut être munie d'un connecteur, afin de faciliter le câblage du véhicule, notamment lorsque le système optique doit être positionnée dans un endroit peu accessible du véhicule.

L'élément de maintien 3 vise à retenir le dispositif de projection de fluide 3' dans une position fonctionnelle vis-à-vis du dispositif de prise de vue 2', lorsque celui-ci est en position de montage. Le dispositif de projection de fluide 3' présente une extrémité de raccordement à un conduit pour amener le fluide, et une autre extrémité formant une buse de projection du fluide. Dans la position fonctionnelle, le fluide est effectivement et précisément projeté par la buse d'extrémité sur l'optique du dispositif de prise de vue 2'. L'élément de maintien 3 est apte à retenir fixement le dispositif de projection 3' dans sa position fonctionnelle. Ils peuvent notamment se fixer l'un à l'autre par clipsage comme c'est le cas dans l'exemple représenté.

Dans certains modes de mise en oeuvre, l'élément de logement 2 et l'élément de maintien 3 sont solidaires l'un de l'autre. Ils peuvent être constitutifs d'un même corps principal de l'agencement de montage 1. Ce corps principal peut-être en matière plastique. Dans une variante de ces modes de mise en oeuvre, on pourrait envisager de former l'élément de logement 2 et éléments de maintien 3 en deux pièces séparées mais rendues solidaires l'une de l'autre, sans aucun degré de liberté, pour former le corps principal.

Pour assembler le système optique à un élément de carrosserie d'un véhicule, l'agencement de montage 1 prévoit également un élément de fixation 4. Cet élément de fixation 4 peut prendre de nombreuses formes comme cela sera présenté dans les différents modes de mise en oeuvre de la présente description.

Dans le mode de mise en oeuvre représenté sur les figures 1a à 1d, l'élément de fixation 4 est formé de pattes flexibles 8a formées sur des parois latérales opposées de l'élément de logement 2. Ces pattes flexibles 8a portent respectivement des rampes disposées sur leur face extérieure, c'est à dire les faces qui ne sont pas tournées vers l'intérieur du logement 5. Ces rampes permettent de progressivement déformer les pattes flexibles lors de l'assemblage de l'agencement 1. Les faces extérieures de ces parois latérales portent également des zones de buté 8b formant, en combinaison respective avec les pattes flexible 8a, des rainures dans laquelle peut venir se loger un support de fixation 9 de l'élément de carrosserie. La figure 1d représente l'agencement de montage 1 du premier mode de mise en oeuvre assemblé à un tel support de fixation 9.

Le support de fixation 9 est ici munie d'une ouverture dans laquelle on peut disposer et encliqueter l'agencement 1 à l'aide de l'élément de fixation 4, par exemple à l'aide des pattes flexibles combinées aux butés 8 qui viennent être décrites.

D'une manière plus générale, l'élément de fixation 4 est configuré pour assembler l'agencement de montage 1 très simplement sur l'élément de carrosserie, par exemple par clipsage, encliquetage, emboitage élastique ou par agrafage. Cet assemblage peut être réversible ou irréversible, c'est à dire qu'une partie au moins de l'agencement 1 est retenu à l'élément de carrosserie par l'élément de fixation 4 sans moyens aisés de démontage.

On comprend que l'assemblage du système optique à l'élément de carrosserie est particulièrement facilité par l'agencement 1 proposé. On peut effectivement livrer l'agencement de montage 1 pré-monté, c'est à dire préalablement équipé, par exemple par clipsage comme on l'a vu dans l'exemple des figures 1a à 1d, du dispositif de prise de vue 2' et du dispositif de projection 3'. L'ensemble pré-monté peut être assemblé sur l'élément de carrosserie en une seule opération manuelle, par exemple par encliquetage sur un support de fixation 9 ou tout autre élément de retenu de l'élément de carrosserie. Un fois monté, le dispositif de prise de vue 2' peut être relié à un calculateur du véhicule par simple câblage de l'interface électrique 7. Le dispositif de projection 3' est quant à lui relié, du côté de son extrémité de raccordement, à un conduit de distribution de fluide.

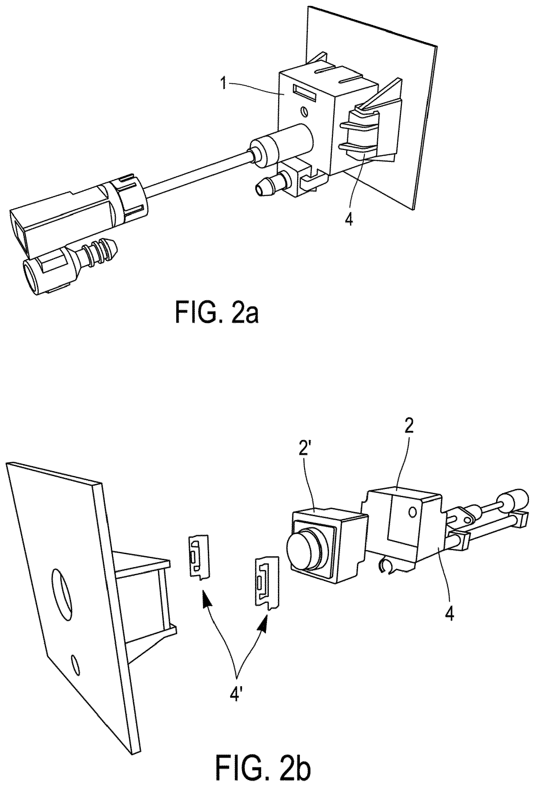

La figure 2a représente une variante de l'exemple représenté sur les figures 1a à 1d. Selon cette variante, l'élément de fixation 4 est formé de poignées flexible 4 disposées sur le corps principal formant l'agencement de montage 1. Ces poignées flexibles sont configurées pour s'encliqueter sur des nervures saillantes de l'élément de carrosserie. Cette variante présente tous les avantages de l'agencement de montage 1 qui viennent d'être énoncées. Elle présente notamment une grande simplicité d'assemblage à l'élément de carrosserie du véhicule. On peut prévoir des pièces métalliques 4' qui s'insèrent entre les poignées flexibles et les nervures pour renforcer le montage de l'ensemble sur le véhicule, comme cela est bien représenté sur la figure 2b.

Les figures 3a et 3b représentent un agencement de montage 1 selon un autre mode de mise en oeuvre. On retrouve bien dans ce mode de mise en oeuvre un élément de logement 2 solidaire de l'élément de maintien 3 pour constituer un corps principal. Deux parois opposées de l'élément de logement 2 sont ici munies chacune d'une languette flexible 6 de retenue du dispositif de prise de vues 2' en position de montage.

L'éléments de fixation 4 de ce mode de mise en oeuvre est est ici constitué de deux pieds d'encliquetage. Ces pieds sont définis par une pluralité de pièces flexibles dont une extrémité est reliée au corps principal et l'autre, libre, porte un cran de fixation. Ces pièces flexibles sont susceptibles de se rapprocher les unes des autres pour passer à travers une ouverture d'un élément de retenue 9 de l'élément de carrosserie. Les pièces flexibles se rétractent après le passage à travers les ouvertures de manière à fixer l'agencement de montage 1 à l'élément de carrosserie.

L'agencement de montage 1 de ce mode de mise en oeuvre comporte également un élément de verrouillage 10. Celui-ci porte deux pièces saillantes 10a configurées pour respectivement pénétrer dans les pieds d'encliquetage, entre les pièces flexibles définissant ces pieds, afin de les bloquer pour qu'elles ne puissent plus se rapprocher les unes des autres. On verrouille de la sorte la fixation de l'agencement de montage 1 à l'élément de carrosserie. On peut prévoir, comme cela est représenté sur la figure 3a, de munir l'élément de verrouillage de fenêtres 11, portées par un bras 13. Ces fenêtres 12 coopèrent avec au moins un cran de positionnement 11, deux crans 11 sur l'exemple de la figure 3a, porté par une face extérieure d'une paroi de l'élément de logement 2.

On peut alors placer sélectivement la pièce du verrouillage 10 dans une position déverrouillée (représentée sur la figure 3a) dans laquelle les pièces saillantes 10a ne sont pas entièrement introduites dans les pieds d'encliquetage du corps principal. Les pièces flexibles définissant ces pieds peuvent alors librement se rapprocher les unes des autres pour permettre l'assemblage du système optique à un élément de carrosserie. Cette position déverrouillée est maintenue en plaçant un cran de positionnement 11 dans une des fenêtres 12

On peut également placer sélectivement la pièce de verrouillage 10 dans une position verrouillée dans laquelle les pièces saillantes 10a sont entièrement introduites dans les pieds d'encliquetage. Les pièces flexibles ne peuvent alors plus se rapprocher les unes des autres et la fixation est effectivement verrouillée. Cette position est maintenue en plaçant chaque cran de positionnement 11 dans une fenêtre 12 du bras 13, comme cela est bien visible sur la figure 3a.

On peut facilement faire coulisser la pièce de verrouillage 10 d'une position déverrouillée à une position verrouillée et inversement. On fixe de la sorte de manière réversible le système optique retenu par l'agencement de montage 1 à l'élément de carrosserie du véhicule, ce qui peut être avantageux lorsqu'il est nécessaire par exemple de remplacer cet élément d'un véhicule accidenté.

Les figures 4a à 4c représentent un agencement de montage 1 conforme à un autre mode de mise en oeuvre. On retrouve bien dans ce mode de mise en oeuvre l'élément de logement 2 solidaire de l'élément de maintien 3 qui constituent un corps principal tout comme dans les modes mise en oeuvre précédents. Dans ce mode de mise en oeuvre toutefois, l'élément de fixation 4 comprend une pièce intermédiaire 14 fixée de manière réversible au corps principal. Sur l'exemple représenté de la figure 4a, cette pièce intermédiaire est formée de deux parties 14a, 14b reliées entre elles par un anneau de liaison 14c et disposées de part et d'autre de cet anneau 14c. L'anneau de liaison 14c évite de masquer l'optique du dispositif de prise de vue 2' quand celui-ci est placé en position de montage dans le dispositif de logement 2.

Les surfaces externes de deux parois opposées de l'élément de logement 2 portent des rails 17 dans lesquelles les deux parties 14a, 14b de la pièce intermédiaire 14 peuvent coulisser. Ces rails 17 peuvent présenter des ouvertures latérales 16 dans lesquelles des ergots 15 placés latéralement sur les parties 14a, 14b peuvent s'engager afin d'assembler la pièce intermédiaire 14 au corps principal et de fixer leur position relative.

La pièce intermédiaire 14 est munie de deux pieds 18 respectivement portés par les deux parties 14a, 14b, chaque pied 18 recevant une agrafe métallique 15 en forme de bague. Ces agrafes en forme de bagues 15, une fois positionnées fixement sur les pieds 18, sont configurées pour coopérer avec des éléments de retenue 9 aménagé sur l'élément de carrosserie du véhicule, de manière à fixer de manière non réversible la pièce intermédiaire 14 à cet élément. Comme cela est bien connu en soi, chaque agrafe métallique 15 peut comprendre une griffe saillante qui peut être introduite dans l'élément de retenue 9 mais qui bloque son extraction.

L'agencement de montage 1, selon ce mode de mise en oeuvre, peut être originellement livré pré-monté, c'est-à-dire en ayant probablement fixé le dispositif de nettoyage 3' et le dispositif de prise de vue 2' sur le corps principal et en ayant placé la pièce intermédiaire 14 munis des agrafes 15 métalliques sur le corps principal. Cet ensemble peut être monté en une seule étape sur l'élément de carrosserie en l'agrafant aux éléments de retenue 9 du véhicule (figure 4b). S'il est nécessaire de démonter le système optique, on peut faire glisser le corps principal pour le séparer de la pièce intermédiaire 14 par l'intermédiaire des rails 17. La pièce intermédiaire 14 reste quant à elle fixée de manière irréversible à l'élément de carrosserie (figure 4c).

Dans une variante représentée sur la figure 4d de ce mode de mise en oeuvre, l'élément de fixation 4 peut être formée d'une matière adhésive 24 disposée sur la pièce intermédiaire 14, cette matière adhésive 24 pouvant par exemple être activée par échauffement afin de fixer la pièce intermédiaire 14 de manière irréversible à l'élément de carrosserie.

Les figures 5a à 5c représentent un agencement de montage 1 conforme à encore un autre mode de mise en oeuvre. Dans ce mode mis en oeuvre, l'élément de fixation 4 et l'élément de maintien 3 sont tous deux portés par une pièce intermédiaire 19, cette pièce intermédiaire 19 étant fixées de manière réversible à l'élément de logement 2 et de manière irréversible à un élément de retenu 9 de l'élément de carrosserie.

Dans ce mode de mise en oeuvre, la position angulaire relative de l'élément de logement 2 peut être ajustée vis-à-vis de la pièce intermédiaire 19. On peut donc régler avec précision, après le montage de l'agencement de montage 1, l'orientation de l'optique du dispositif de prise de vue 2', ce qui peut être important lorsque le champ optique est relativement étroit comme cela peut être le cas des dispositifs de type LIDAR.

La pièce intermédiaire 19 porte trois roues crantés 20, chaque roue 20 présentant un alésage central. Ces alésages sont configurés pour recevoir des inserts 21, par exemple des inserts plastiques, portant sur leur surface extérieure des agrafes métalliques 18 en forme de bague. Ces inserts 21 présentent également un évidemment axial portant un filetage interne. Les extrémités des inserts 21 qui émergent des roues crantées 20 sont introduits dans des éléments de retenue 9 de l'élément de carrosserie pour y fixer de manière irréversible la pièce intermédiaire 19 portant l'élément de maintien 3 et le dispositif de projection 3'. Dans une alternative, on pourrait également envisager de fixer la pièce intermédiaire 19 à l'élément de carrosserie par l'intermédiaire d'une matière adhésive. Dans ce cas, les inserts 21 ne seraient pas nécessaires, et on ferait porter le filetage interne par l'alésage central des roues 20.

L'élément de logement 2 est quant à lui couplé de manière réversible à la pièce intermédiaire 19 par l'intermédiaire d'une pluralité de pièces rotulées 22, trois dans l'exemple représenté pour être respectivement associées aux roues crantées 20.

Chaque pièce rotulée 22, comme cela est bien visible sur la figure 5d, est formée d'un axe central dont une première extrémité 22a porte un filetage externe configuré pour coopérer avec le filetage interne de l'évidement axial d'un insert 21. Une partie flexible 22c de la pièce rotulée 22 coopère avec les crans d'une roue 20 pour permettre d'indexer la position angulaire de la pièce rotulée 22 par rapport à la roue 20, et donc à la progression par vissage de la pièce rotulée 22 dans l'insert 21. L'autre extrémité 22b de l'axe central pénètre dans une ouverture aménagée sur l'élément de logement 2. L'ouverture rend accessible depuis l'extérieur l'extrémité 22b de l'axe qui peut être conformé pour être manipulable en rotation par un outil. L'axe central porte également une rotule sphérique 22d qui est configurée pour se clipser dans un logement de clipsage 23 de l'élément de logement 2, pour solidariser cet élément de logement aux pièces rotulées 22 et donc à l'élément intermédiaire 19.

On peut ainsi entraîner en rotation les pièces rotulées 22 dont le mouvement et la position angulaire est indexée par la partie flexible 22c se logeant dans les crans des roues 20. La progression par vissage d'une pièce rotulée 22 dans un insert 21, entraine le déplacement de l'élément de logement 2 par rotation autour d'un axe passant par les deux autres pièces rotulées 22. Avantageusement, on disposera les trois roues crantées 20, dont les alésages centraux définissent trois points de fixation de l'élément de logement, à la surface de la pièce intermédiaire 19 pour qu'elles forment un triangle rectangle. La roue crantée 20 et la pièce rotulée 22 disposées à l'angle droit de ce triangle constitue un point de fixation pivot, les deux autres couples roue crantée - pièce rotulée permettant alors d'orienter angulairement et respectivement l'élément de logement 2 (et donc le dispositif de prise de vue 2') selon deux axes perpendiculaires l'un à l'autre.

On note que ces éléments d'ajustement de la position angulaire de l'élément de logement 2 est tout à fait compatible avec le mode de mise en oeuvre précédent dans lequel l'élément de logement 2 et l'élément de maintien 3, solidaires l'un de l'autre, étaient associé à une pièce intermédiaire 14.

Bien entendu l'invention n'est pas limitée aux modes de mise en oeuvre décrits et on peut y apporter des variantes de réalisation sans sortir du cadre de l'invention tel que défini par les revendications.

## Revendications

1. Agencement de montage (1) d'un système optique sur un élément de carrosserie d'un véhicule, le système optique comprenant un dispositif de prise de vue (2') et un dispositif de projection de fluide (3') de nettoyage du dispositif de prise de vue (2'), le dispositif de prise de vue comprenant un boîtier retenant une optique, le boîtier comprenant et protègeant un capteur disposé sur un circuit imprimé et portant un connecteur électrique électriquement relié au circuit imprimé, l'agencement de montage (1) comprenant :
- un élément de logement (2) pour placer et retenir le dispositif de prise de vue (2') en position de montage, l'élément de logement (2) étant muni d'une interface électrique (7) présentant un premier côté, émergeant à l'intérieur du logement, configuré pour se coupler au connecteur électrique disposé sur le boîtier du dispositif de prise de vue (2') lorsque celui-ci est retenu en position de montage et un second coté, émergeant à l'extérieur du logement, configuré pour permettre son raccordement à des câbles de connexion;
- un élément de maintien (3) du dispositif de projection de fluide (3') visant à placer celui-ci dans une position fonctionnelle vis-à-vis du dispositif de prise de vue (2') disposé en position de montage ;
- un élément de fixation (4) de l'élément de logement (2) et de l'élément de maintien (3) à l'élément de carrosserie du véhicule.

2. Agencement de montage (1) selon la revendication précédente dans lequel l'élément de logement (2) présente une paroi latérale dans laquelle est aménagée au moins une languette flexible (6) présentant une extrémité libre portant un cran (6a), la languette flexible (6) pouvant se déformer pour permettre l'introduction du dispositif optique de prise de vue (2') dans l'élément de logement (2) et refermer le cran (6a) sur celui-ci lorsqu'il est disposé en position de montage.

3. Agencement de montage (1) selon l'une des revendications précédentes dans lequel l'élément de logement (2) présente un fond et l'interface électrique (7) comprend un connecteur disposé sur le fond de l'élément de logement (2) .

4. Agencement de montage (1) selon la revendication précédente dans lequel l'interface électrique (7) comprend un câble de connexion électriquement relié au connecteur disposé sur le fond de l'élément de logement (2).

5. Agencement de montage selon l'une des revendications précédentes dans lequel l'élément de logement (2) et l'élément de maintien (3) sont constitutif d'un même corps principal.

6. Agencement de montage (1) selon la revendication précédente dans lequel l'élément de fixation (4) comprend une pluralité de pattes flexibles (8a) disposées sur le corps principal et configurées pour s'encliqueter sur l'élément de carrosserie.

7. Agencement de montage (1) selon l'une des revendications 1 à 5 dans lequel l'élément de fixation (5) comprend une pluralité de pieds d'encliquetage (4) disposée sur le corps principal et configurés pour pénétrer dans des ouvertures aménagées sur l'élément de carrosserie.

8. Agencement de montage (1) selon la revendication précédente comprenant un élément de verrouillage (10) pouvant être sélectivement placé dans une position déverrouillée dans laquelle les pieds d'encliquetage (4) peuvent être extraits des ouvertures de l'élément de carrosserie et dans une position de verrouillage dans laquelle les pieds d'encliquetage (4) ne peuvent pas être extraits des ouvertures de l'élément de carrosserie.

9. Agencement de montage (1) selon la revendication 5 dans lequel l'élément de fixation (4) est porté par une pièce intermédiaire (14) fixée de manière réversible au corps principal.

10. Agencement de montage (1) selon la revendication précédente dans lequel la pièce intermédiaire (14) comprend deux parties (14a, 14b) reliées par un anneau de liaison (14c), chaque partie étant configurée pour coulisser dans un rail d'assemblage (17) aménagé sur le corps principal.

11. Agencement de montage (1) selon l'une des revendications 1 à 4 dans lequel l'élément de fixation (4) et l'élément de maintien (3) sont portés par une pièce intermédiaire (19) fixée de manière réversible à l'élément de logement (2).

12. Agencement de montage (1) selon l'une des revendications 9 et 11 dans lequel la pièce intermédiaire (14, 19) est fixée de manière irréversible à l'élément de carrosserie.

13. Agencement de montage (1) selon la revendication précédente dans lequel l'élément de fixation (4) comprend une pluralité d'agrafes métalliques (15') configurées pour coopérer avec des éléments de retenus (9) aménagés sur l'élément de carrosserie du véhicule.

14. Agencement de montage (1) selon la revendication 12 dans lequel l'élément de fixation (4) comprend une matière adhésive (24) disposée sur pièce intermédiaire.

15. Agencement de montage (1) selon l'une des revendications 9 à 14 dans lequel la pièce intermédiaire (19) comprend des éléments d'ajustement de la position angulaire de l'élément de logement (2).

## Patentansprüche

1. Montageanordnung (1) eines optischen Systems an einem Karosserieelement eines Fahrzeugs, das optische System umfassend eine Bildaufnahmevorrichtung (2') und eine Spritzvorrichtung (3') für ein Fluid zur Reinigung der Bildannahmevorrichtung (2'), die Bildaufnahmevorrichtung umfassend ein Gehäuse, das eine Optik festhält, wobei das Gehäuse einen Sensor umfasst und schützt, der an einer gedruckten Schaltung angeordnet ist und einen elektrischen Verbinder, der mit der gedruckten Schaltung elektrisch verbunden ist, trägt, die Montageanordnung (1) umfassend:
- ein Aufnahmeelement (2) zum Platzieren und Festhalten der Bildaufnahmevorrichtung (2') in einer Montageposition, wobei das Aufnahmeelement (2) mit einer elektrischen Schnittstelle (7) versehen ist, vorweisend eine erste Seite, die in das Gehäuse hineinragt, und konfiguriert, um sich mit dem elektrischen Verbinder zu koppeln, der an dem Gehäuse der Bildaufnahmevorrichtung (2') angeordnet ist, wenn diese in der Montageposition festgehalten wird, und eine zweite Seite, die aus dem Gehäuse herausragt, konfiguriert, um ihren Anschluss an Verbindungskabel zu ermöglichen;
- ein Halteelement (3) der Fluidspritzvorrichtung (3'), das darauf abzielt, diese in eine funktionelle Position gegenüber der Bildaufnahmevorrichtung (2'), die in der Montageposition angeordnet ist, zu platzieren;
- ein Element (4) zur Befestigung des Aufnahmeelements (2) und des Halteelements (3) an dem Karosserieelement des Fahrzeugs.

2. Montageanordnung (1) nach dem vorstehenden Anspruch, wobei das Aufnahmeelement (2) eine Seitenwand vorweist, in der mindestens eine flexible Lasche (6) eingerichtet ist, die ein freies Ende vorweist, das eine Einkerbung (6a) trägt, wobei sich die flexible Lasche (6) zum Ermöglichen der Einführung der optischen Bildaufnahmevorrichtung (2') in das Aufnahmeelement (2) und Verschließen der Einkerbung (6a) an diesem verformen kann, wenn sie in der Montageposition angeordnet ist.

3. Montageanordnung (1) nach einem der vorstehenden Ansprüche, wobei das Aufnahmeelement (2) einen Boden vorweist und die elektrische Schnittstelle (7) einen Verbinder umfasst, der an dem Boden des Aufnahmeelements (2) angeordnet ist.

4. Montageanordnung (1) nach dem vorstehenden Anspruch, wobei die elektrische Schnittstelle (7) ein elektrisches Verbindungskabel, das mit dem Verbinder verbunden ist, der an dem Boden des Aufnahmeelements (2) angeordnet ist.

5. Montageanordnung nach einem der vorstehenden Ansprüche, wobei das Aufnahmeelement (2) und das Halteelement (3) Bestandteil eines gleichen Hauptkörpers sind.

6. Montageanordnung (1) nach dem vorstehenden Anspruch, wobei das Befestigungselement (4) eine Vielzahl von flexiblen Laschen (8a), die an dem Hauptkörper angeordnet und konfiguriert sind, um an dem Karosserieelement einzurasten, umfasst.

7. Montageanordnung (1) nach einem der Ansprüche 1 bis 5, wobei das Befestigungselement (5) eine Vielzahl von Rastfüßen (4) umfasst, die an dem Hauptkörper angeordnet und konfiguriert sind, um in Öffnungen einzudringen, die an dem Karosserieelement eingerichtet sind.

8. Montageanordnung (1) nach dem vorstehenden Anspruch, umfassend ein Verriegelungselement (10), das wahlweise in eine entriegelte Position, in der die Rastfüße (4) aus den Öffnungen des Karosserieelements herausgezogen werden können, und in eine Verriegelungsposition, in der die Rastfüße (4) nicht aus den Öffnungen des Karosserieelements herausgezogen werden können, platziert werden kann.

9. Montageanordnung (1) nach Anspruch 5, wobei das Befestigungselement (4) durch ein Zwischenstück (14) getragen wird, das an dem Hauptkörper reversibel befestigt ist.

10. Montageanordnung (1) nach dem vorstehenden Anspruch, wobei das Zwischenstück (14) zwei Teile (14a, 14b) umfasst, die durch einen Verbindungsring (14c) verbunden sind, wobei jeder Abschnitt zum Gleiten in einer Zusammensetzungsschiene (17) konfiguriert ist, die an dem Hauptkörper eingerichtet ist.

11. Montageanordnung (1) nach einem der Ansprüche 1 bis 4, wobei das Befestigungselement (4) und das Halteelement (3) durch ein Zwischenstück (19) getragen werden, das an dem Aufnahmeelement (2) reversibel befestigt ist.

12. Montageanordnung (1) nach einem der Ansprüche 9 und 11, wobei das Zwischenstück (14, 19) an dem Karosserieelement irreversibel befestigt ist.

13. Montageanordnung (1) nach dem vorstehenden Anspruch, wobei das Befestigungselement (4) eine Vielzahl von Metallklammern (15') umfasst, die zum Zusammenwirken mit Festhalteelementen (9) konfiguriert sind, die an dem Karosserieelement des Fahrzeugs eingerichtet sind.

14. Montageanordnung (1) nach Anspruch 12, wobei das Befestigungselement (4) ein Klebematerial (24), das an dem Zwischenstück angeordnet ist, umfasst.

15. Montageanordnung (1) nach einem der Ansprüche 9 bis 14, wobei das Zwischenstück (19) Elemente zum Einstellen der Winkelposition des Aufnahmeelements (2) umfasst.

## Claims

1. Arrangement (1) for mounting an optical system on a body element of a vehicle, the optical system comprising an image-capturing device (2') and a device (3') for spraying fluid for cleaning the image-capturing device (2'), the image-capturing device comprising a case retaining a lens, the case comprising and protecting a sensor arranged on a printed circuit and carrying an electrical connector electrically connected to the printed circuit, the mounting arrangement (1) comprising:
- a housing element (2) for positioning and retaining the image-capturing device (2') in the mounting position, the housing element (2) being provided with an electrical interface (7) having a first side that emerges inside the recess and is designed to couple to the electrical connector arranged on the case of the image-capturing device (2') when said device is retained in the mounting position, and a second side that emerges outside the recess and is designed to be connected to connection cables;
- an element (3) for holding the fluid-spraying device (3'), which element is aimed at positioning said device in a functional position with respect to the image-capturing device (2') arranged in the mounting position;
- an element (4) for fastening the housing element (2) and the holding element (3) to the body element of the vehicle.

2. Mounting arrangement (1) according to the preceding claim, wherein the housing element (2) has a side wall in which at least one flexible tab (6) having a free end bearing a notch (6a) is provided, the flexible tab (6) being able to deform to allow the introduction of the optical image-capturing device (2') in the housing element (2) and to close the notch (6a) thereon when said device is arranged in the mounting position.

3. Mounting arrangement (1) according to one of the preceding claims, wherein the housing element (2) has a bottom and the electrical interface (7) comprises a connector arranged on the bottom of the housing element (2).

4. Mounting arrangement (1) according to the preceding claim, wherein the electrical interface (7) comprises a connection cable electrically connected to the connector arranged on the bottom of the housing element (2).

5. Mounting arrangement according to one of the preceding claims, wherein the housing element (2) and the holding element (3) are part of the same main body.

6. Mounting arrangement (1) according to the preceding claim, wherein the fastening element (4) comprises a plurality of flexible tabs (8a) arranged on the main body and designed to snap onto the body element.

7. Mounting arrangement (1) according to one of claims 1 to 5, wherein the fastening element (5) comprises a plurality of snap-on feet (4) arranged on the main body and designed to enter openings provided in the body element.

8. Mounting arrangement (1) according to the preceding claim, comprising a locking element (10) that can be selectively positioned in an unlocked position in which the snap-on feet (4) can be removed from the openings in the body element and in a locking position in which the snap-on feet (4) cannot be removed from the openings in the body element.

9. Mounting arrangement (1) according to claim 5, wherein the fastening element (4) is carried by an intermediate part (14) reversibly fastened to the main body.

10. Mounting arrangement (1) according to the preceding claim, wherein the intermediate part (14) comprises two parts (14a, 14b) connected by a connecting ring (14c), each part being designed to slide in an assembly rail (17) provided on the main body.

11. Mounting arrangement (1) according to one of claims 1 to 4, wherein the fastening element (4) and the holding element (3) are carried by an intermediate part (19) reversibly fastened to the housing element (2).

12. Mounting arrangement (1) according to one of claims 9 and 11, wherein the intermediate part (14, 19) is irreversibly fastened to the body element.

13. Mounting arrangement (1) according to the preceding claim, wherein the fastening element (4) comprises a plurality of metal clips (15') designed to cooperate with retaining elements (9) provided on the body element of the vehicle.

14. Mounting arrangement (1) according to claim 12, wherein the fastening element (4) comprises an adhesive material (24) arranged on the intermediate part.

15. Mounting arrangement (1) according to one of claims 9 to 14, wherein the intermediate part (19) comprises elements for adjusting the angular position of the housing element (2).
